# FASCICULE DE BREVET EUROPEEN

(11) **EP 0 319 401 B1**
(45) Date de publication et mention de la délivrance du brevet: **13.10.1993**
(21) Numéro de dépôt: 88403007.3
(22) Date de dépôt: 30.11.1988
(51) Int. Cl.: B29C 55/14, C08J 5/18

(54) **Procédé de fabrication d'une pellicule rétractable**
Verfahren zum Herstellen einer schrumpfbaren Folie
Method of producing a shrinkable film

(30) Priorité: 30.11.1987 FR 8716545
(43) Date de publication de la demande: 07.06.1989
(73) Titulaire: BOLLORE TECHNOLOGIES, F-29195 Quimper (FR)
(72) Inventeur: Coste, Jean Philippe, F-68210 Illzach (FR); Diemunsch, Robert, F-68000 Colmar (FR)
(74) Mandataire: Martin, Jean-Jacques

(56) Documents cités:
- EP-A- 0 171 733
- EP-A- 0 212 731
- GB-A- 914 411
- GB-A- 1 035 887
- US-A- 4 597 920
- PATENT ABSTRACTS OF JAPAN, vol. 7, no. 20 (M-188)[1165], 26 janvier 1983
- PATENT ABSTRACTS OF JAPAN, vol. 12, no. 55 (M-669)[2902], 19 février 1988, page 44 M 669
- PATENT ABSTRACTS OF JAPAN, vol. 7, no. 189 (M-237)[1334], 18 août 1983
- KUNSTSTOFFE, vol. 74, no. 9, septembre 1984, Munich, DE; S. BORK et al.: "Lineares Polyethylen niedriger Dichte (LLDPE) - Eigenschaften, Verarbeitung und Anwendung"

## Description

L'invention se rapporte à un procédé de fabrication d'une pellicule thermoplastique rétractable à la chaleur, destinée notamment au domaine de l'emballage. L'invention concerne les pellicules réalisées à partir d'un copolymère linéaire d'éthylène avec au moins une alpha-oléfine en C₄ à C₈.

On connaît une pellicule rétractable à base de copolymère d'éthylène avec une alpha-oléfine en C₈ - C₁₈ décrite dans le brevet US 4597920.

Il est mentionné notamment dans ce brevet, que le matériau utilisé doit contenir au moins 5 % en poids d'un tel polymère présentant les caractéristiques suivantes :
- un indice de fluidité à l'état fondu compris entre 0,1 - 4,0 g/10 mn
- une masse volumique comprise entre 0,9 et 0,94 g/cm³
- un exposant de contrainte supérieur à 1,3
- deux régions distinctes de fusion des cristallites au-dessous de 128°C déterminées par analyse calorimétrique différentielle à compensation de puissance (DSC), la différence des températures étant d'au moins 15°C.

L'étirage doit au surplus être effectué dans l'intervalle de température défini par les deux points de fusion des cristallites.

Le mode de fabrication envisagé est celui du soufflage de gaine, connu en soi, qui consiste à extruder la matière à travers une filière en lui donnant une forme tubulaire, la refroidir dans un premier temps puis la réchauffer jusqu'à la température appropriée en l'étirant dans la direction longitudinale en même temps qu'on augmente les dimensions transversales de la gaine par un soufflage interne d'air.

Un tel procédé nécessite l'emploi de produits plus faciles à travailler que pour d'autres techniques. Cela implique l'utilisation de copolymères dont le comonomère oléfinique est lourd, au moins en C₈.

Il impose en outre un choix de composants conduisant à un indice de fluidité à l'état fondu faible, inférieur à 4 g/10 mn. Enfin, il ne permet pas l'obtention de pellicules d'épaisseur inférieure à 10 ou 12 µm selon le produit utilisé.

On connait également la demande de brevet EP 171733 relative à un procédé de fabrication de film rétractable à partir d'un polymère de polypropylène mettant en jeu deux étapes d'étirage dans des directions perpendiculaires mais imposant un traitement thermique intermédiaire, effectué à une température supérieure à celle de la première étape d'étirage. Outre le fait qu'elle ne vise que le polypropylène, l'invention décrite dans ce document concerne un film rétractable dans une direction essentiellement.

On connait également la demande de brevet EP 240705 relative à un film rétractable obtenu par biétirage d'un polymère comprenant au moins un copolymère linéaire d'éthylène avec une alpha-oléfine. Il est fait état de la caractéristique de la courbe calorimétrique différentielle à compensation de puissance (DSC) de la composition polymère selon laquelle la surface endothermique 10°C au dessous de son point de fusion représente au moins 55 % de la surface endothermique totale.

On observe que la caractéristique de l'invention couverte par cette demande vise à l'obtention d'un film présentant une faible variation d'épaisseur et une bonne retractabilité à chaud. Toutefois cet objectif a été établi en fonction de la même méthode d'étirage par soufflage de gaine décrite dans US 4597920. Il s'ensuit que l'enseignement de ce document se rapporte à un produit à faible indice de fluidité à l'état fondu, et à une pellicule obtenue dont l'épaisseur n'est pas inférieure à 16 µm.

L'invention propose un procédé ne comportant pas ces inconvénients. Le procédé de fabrication d'une pellicule thermoplastique rétractable à la chaleur à partir d'un copolymère d'éthylène à faible densité mettant en jeu deux étapes d'étirage dudit copolymère, la deuxième étape d'étirage étant effectuée dans une direction perpendiculaire à la première est caractérisé en ce qu'il consiste :
- à chauffer au-delà de sa température de fusion et à extruder à travers une filière plate, un copolymère linéaire d'éthylène avec un comonomère d'alpha-oléfine en C₄ à C₈ de densité comprise entre 0,9 et 0,940 et dont l'indice de fluidité à l'état fondu est compris entre 1 et 7 g/10 mn,
- couler ledit copolymère sur un tambour refroidi à une température de trempe choisie en fonction de l'épaisseur de la pellicule à obtenir,
- le réchauffer jusqu'à une première température,
- l'étirer dans le sens marche à au moins 3 fois la dimension initiale, de la pellicule non étirée,
- le chauffer à une deuxième température supérieure à la première mais inférieure à sa température de fusion en l'étirant sens travers à l'aide de pinces à au moins 5 fois sa dimension initiale,
- refroidir la pellicule obtenue à la température ambiante.

La température à laquelle la matière est refroidie à la sortie de la tête d'extrusion est suffisamment basse pour ramener celle-ci à un état solide. Elle est dans la pratique pour les produits transformés par ce procédé comprise entre 20° et 90°C.

Ensuite, la première température à laquelle on réchauffe la matière est suffisamment élevée pour qu'on puisse l'étirer, sens marche, sans risque de casse ni de collage sur les supports servant à l'étirage, qui sont en général des cylindres. Elle est dans la pratique comprise entre 90° et 115°C.

Cette température est voisine de la température de consigne des cylindres. L'écart entre température réelle de la pellicule et température de consigne dépend de son épaisseur, du nombre et des dimensions des cylindres, du temps de contact pellicule-cylindre, du coefficient d'échange thermique entre le fluide caloporteur et la surface des cylindres, donc de la vitesse de production.

La deuxième température, supérieure à la première, à laquelle on étire la pellicule sens travers est au plus inférieure de 25°C à la température de fusion du copolymère. Elle sera de préférence choisie assez près de cette dernière et dépendra de la tenue de la feuille lors de l'étirage de façon à éviter une casse due à une viscosité élongationnelle trop faible.

Après chacune des deux étapes d'étirage, la pellicule subit de préférence un traitement thermique de stabilisation modéré.

Ce procédé permet l'emploi de copolymères, dont le monomère oléfinique peut être outre 1-octène, le 1-butène ou bien le 1-hexène, qui sont réputés pour être des produits plus difficiles à transformer. Ils sont intéressants car moins onéreux.

Un avantage important de ce procédé est qu'il permet la réalisation de pellicules de très faible épaisseur, de l'ordre de 4 µm, associée à une grande vitesse de production pouvant dépasser 100 m par minute.

Pour la mise en oeuvre du procédé on peut utiliser une installation d'étirage bi-axial, connue en soi, où l'étirage en sens marche est effectué par passage de la matière entre une pluralité de rouleaux chauffés, et l'étirage sens travers est réalisé au moyen de pinces, enserrant les bords latéraux de la pellicule, entraînées le long de rails dont l'écartement est progressif jusqu'à la dimension transversale définitive donnée à la pellicule. Le chauffage pour cette étape du procédé est assuré, le plus souvent, par un flux d'air chaud.

On décrit ci-après plus en détail un exemple de réalisation de l' invention.

Dans cet exemple, on utilise un copolymère linéaire d'éthylène avec le 1-octène vendu par la Société DOW CHEMICAL sous la marque DOWLEX 2035. Ce produit présente un indice de fluidité de 6 g/10 mn et sa densité est de 0,919.

On chauffe le polymère à une température comprise entre 240 et 265°C et on l'extrude à travers une filière plate de 880 mm de large. La température d'extrusion dépend de l'indice de fluidité et du degré de stabilisation de la matière.

La matière est recueillie sur un tambour de coulée dont la température est maintenue, par refroidissement interne, à 70°C.

La pellicule formée est ensuite reprise par des rouleaux chauffés de 93°C à 112°C pour y subir un préchauffage jusqu'à ladite première température, puis elle est étirée dans le sens machine par passage entre des rouleaux de petit diamètre dont le rapport des vitesses avec ceux de préchauffage détermine l'étirement. Il est dans le cas présent de 4/1.

A cette étape du procédé la pellicule étirée longitudinalement est stabilisée thermiquement au moyen de rouleaux maintenus à une température supérieure à 100°C.

A la sortie de ces rouleaux, la pellicule est guidée au moyen de pinces entre deux rails disposés dans un même plan horizontal. Les pinces sont entraînées en continu le long des rails par des chaînes formant une boucle. Elles se présentent en position déployée à l'amont où leurs mâchoires se referment sur les bords de la pellicule. Les rails s'écartent progressivement de l'amont vers l'aval selon une géométrie étudiée pour obtenir un étirement transversal de rapport compris entre 7/1 et 9/1.

Cet étirage a lieu dans un four, à air chaud par exemple, qui comporte plusieurs zones de chauffe que l'on peut régler indépendamment les unes des autres.

Il comprend à l'entrée une première zone de préchauffage dans laquelle les rails sont parallèles et où la pellicule est progressivement amenée à la deuxième température. La pellicule traverse ensuite une zone d'étirage transversal dans laquelle les rails s'écartent selon une géométrie définie et où elle est maintenue à cette deuxième température. Dans une troisième zone où les rails sont à nouveau parallèles, la pellicule peut subir un traitement thermique de stabilisation modéré. Le temps de séjour dans cette dernière zone du four est choisie de façon à éviter la relaxation des contraintes internes et obtenir une bonne rétractabilité de la pellicule.

Les températures de consigne des différentes sections sont déterminées en fonction de la vitesse de production, de la vitesse de l'air de chauffe et de l'épaisseur de la feuille de façon que la matière soit au moment de l'étirage à ladite deuxième température. Celle-ci est choisie assez voisine de la température de fusion. Elle ne doit en aucune façon en être écartée de plus de 25°C.

La pellicule est entraînée hors du four par les pinces sur une distance lui permettant de revenir à la température ambiante. Son refroidissement peut être éventuellement accéléré au moyen d'une douche à air. Après dégagement des pinces, la pellicule est enfin enroulée sur bobine.

On a réalisé, selon ce procédé, différentes pellicules rétractables dont les caractéristiques sont réunies sur le tableau qui suit.

| | A | B |
|---|---|---|
| Température d'extrusion | 240-265°C | 230-265°C |
| Température du tambour de coulée | 70°C | 68°C |
| Température de consigne des cylindres d'étirage, sens marche | 93-112°C | 95-115°C |
| Température de consigne de la section du four pour l'étirage, sens travers | 120-117°C | 125-115°C |
| Taux d'étirage, sens marche | 4,05 | 4,09 |
| Taux d'étirage, sens travers | 8,0 | 8,5 |
| Laize de la pellicule à la sortie du four | 5,5 m | 6 m |
| Epaisseur moyenne de la pellicule | 6 µm | 12 µm |
| Epaisseur de la pellicule, au milieu | 4,5 µm | 8 µm |
| Epaisseur de la pellicule, près du bord | 12 µm | 15 µm |
| Vitesse de défilement | 43 m/mn | 20 m/mn |

| Taux de rétraction à 120°C | | |
|---|---|---|
| . sens marche | 40 % | |
| . sens travers | 60 % | |

La matière A est un copolymère linéaire d'éthylène avec le 1-octène, de densité 0,919 et d'indice de fluidité à l'état fondu de 6 g/10 mn, vendu sous la marque DOWLEX 2035 par la Société DOW CHEMICAL. La matière B est un copolymère linéaire d'éthylène avec le 1-octène, de densité 0,917 et d'indice de fluidité à l'état fondu de 2,3 g/10 mn, vendu sous la marque DOWLEX 2047 par la Société DOW CHEMICAL.

## Revendications

1. Procédé de fabrication d'une pellicule thermoplastique rétractable à la chaleur à partir d'un copolymère d'éthylène à faible densité mettant en jeu deux étapes d'étirage dudit copolymère, la deuxième étape d'étirage étant effectuée dans une direction perpendiculaire à la première, caractérisé en ce qu'il consiste :
- à chauffer au-delà de sa température de fusion et à extruder à travers une filière plate un copolymère linéaire d'éthylène avec un comonomère d'alpha-oléfine en C₄ à C₈ de densité comprise entre 0,9 et 0,94 et dont l'indice de fluidité à l'état fondu est compris entre 1 et 7 g/10mn,
- couler ledit copolymère sur un tambour refroidi à une température de trempe choisie en fonction de l'épaisseur de la pellicule à obtenir,
- à le réchauffer jusqu'à une première température suffisamment élevée pour qu'on puisse l'étirer, sens marche, sans risque de casse ni de collage sur les supports servant à l'étirage,
- à l'étirer dans le sens marche à au moins 3 fois la dimension initiale de la pellicule non étirée,
- à le chauffer à une deuxième température, supérieure à la première mais inférieure à sa température de fusion, en l'étirant dans le sens travers, à l'aide de pinces, à au moins 5 fois sa dimension initiale,
- enfin à refroidir la pellicule obtenue à température ambiante.

2. Procédé selon la revendication prcédente, caractérisé en ce que ladite première température est comprise entre 90° et 115°C.

3. Procédé selon l'une des revendications précédentes, caractérisé en ce que ladite deuxième température est au plus inférieure de 25°C à la température de fusion du copolymère linéaire d'éthylène.

4. Procédé selon l'une des revendications précédentes, caractérisé en ce que la pellicule subit un traitement thermique de stabilisation modéré après chacune des deux étapes d'étirage.

## Claims

1. Process for the manufacture of a heat shrinkable thermoplastic film from a low density ethylene copolymer involving stretching the said copolymer in two stages, the second stretching stage being carried out in a direction perpendicular to the first, characterised in that it consists of :
- heating a linear copolymer of ethylene with a C₄ to C₈ alpha-olefin comonomer having a density of between 0.9 and 0.94 and a melt flow index of between 1 and 7 g/10 mn, above its melting point and extruding it through a film casting die,
- casting the said copolymer onto a chilled drum at an annealing temperature selected with regard to the thickness of the film to be obtained,
- reheating it to an initial temperature which is sufficiently high for it to be stretched in the machine direction, without risk of breaking or of sticking to the supports used for stretching,
- stretching it in the machine direction to at least 3 times the initial size of the non stretched film,
- heating it to a second temperature, higher than the first but less than its melting point, whilst stretching it in the cross direction, with the aid of clamps, to at least 5 times its initial size,
- finally cooling the film obtained to ambient temperature.

2. Process according to the preceding claim, characterized in that the said initial temperature lies between 90°C and 115°C.

3. Process according to one of the preceding claims, characterized in that the second temperature is no lower than 25°C below the melting point of the linear ethylene copolymer.

4. Process according to one of the preceding claims, characterized in that the film is subjected to moderate stabilization heat treatment after each of the two stretching stages.

## Patentansprüche

1. Verfahren zum Herstellen einer unter Wärmeeinfluß schrumpfbaren thermoplastischen Folie aus einem Ethylencopolymeren geringer Dichte unter Anwendung von zwei Streckungsstufen des Polymeren, wobei die zweite Streckungsstufe in einer Richtung senkrecht zur ersten durchgeführt wird, gekennzeichnet durch die folgenden Schritte:
- Erwärmung über der Schmelztemperatur und Querextrusion aus einer Breitschlitzdüse eines linearen Ethylencopolymeren mit einem α-Olefincomonomeren mit C₄ bis C₈ einer Dichte von 0,9 bis 0,94, dessen Fließzahl in geschmolzenem Zustand zwischen 1 und 7 g/10 mn liegt,
- Aufgießen des Copolymeren auf eine auf Abschrecktemperatur gekühlte Trommel, wobei die Temperatur als Funktion der Dicke der zu erhaltenden Folie gewählt ist,
- Wiedererwärmung auf eine erste Temperatur, die ausreichend hoch ist, so daß man die Folie in Bewegungsrichtung ohne Gefahr eines Bruches oder eines Festklebens auf den zur Streckung dienenden Stützen strecken kann,
- Streckung der Folie in Bewegungsrichtung auf wenigstens dreifache Dimension der ursprünglichen, nicht gestreckten Folie,
- Erwärmung auf eine zweite Temperatur, die höher als die erste, jedoch niedriger als die Schmelztemperatur ist, wobei die Folie mit Hilfe von Klammern in Querrichtung gestreckt wird, auf das wenigstens fünffache ihrer ursprünglichen Dimension,
- schließlich Abkühlung der erhaltenen Folie auf die Zimmertemperatur.

2. Verfahren nach dem vorstehenden Anspruch, dadurch gekennzeichnet, daß die erste Temperatur in einem Bereich von 90° bis 115° C liegt.

3. Verfahren nach einem der vorstehenden Ansprüche, dadurch gekennzeichnet, daß die zweite Temperatur höchstens um 25° C niedriger ist als die Schmelztemperatur des linearen Ethylencopolymeren.

4. Verfahren nach einem der vorstehenden Ansprüche, dadurch gekennzeichnet, daß die Folie nach jeder der beiden Streckungsstufen einer gemäßigten Wärmebehandlung zur Stabilisierung unterzogen wird.
